# EUROPÄISCHE PATENTSCHRIFT

(11) **EP 1 637 451 B1**
(45) Veröffentlichungstag und Bekanntmachung des Hinweises auf die Patenterteilung: **30.09.2009**
(21) Anmeldenummer: 05028457.9
(22) Anmeldetag: 15.03.2003
(51) Int. Cl.: B64D 11/06, B60N 2/30

(54) **Fahrzeugsitz, insbesondere Fluggastsitz**
Vehicle seat, in particular an airline passenger seat
Siège pour vehicule, en particulier siège pour passager d'avion

(30) Priorität: 28.03.2002 DE 10214104
(43) Veröffentlichungstag der Anmeldung: 22.03.2006
(62) Teilanmeldung aus: 03005871.3
(73) Patentinhaber: Airbus Deutschland GmbH, 21129 Hamburg (DE)
(72) Erfinder: Muin, Andrew, 21698 Harsefeld (DE); Schumacher, Markus, 21614 Buxtehude (DE); Schoenenberg, Frank-Heinrich, 74253 Schwäbisch Hall (DE); Majunke, Christian, 21073 Hamburg (DE)
(74) Vertreter: Maiwald Patentanwalts GmbH

(56) Entgegenhaltungen:
- EP-A- 0 322 930
- EP-A- 0 882 648
- DE-A- 10 052 591
- DE-A1- 3 433 590
- GB-A- 2 292 676
- US-A- 4 394 047
- US-A- 4 498 649

## Beschreibung

Die Erfindung betrifft einen Fahrzeugsitz, insbesondere Fluggastsitz, der mit einem Sitzteil und einer Rückenlehne, die an einem Sitzgestell angeordnet sind, versehen ist. Das Sitzgestell weist mindestens einen freitragenden Tragbalken, der auf Gestellfüßen abgestützt ist, und wenigstens zwei die Rückenlehne einfassende Sitzteiler, die an dem Tragbalken befestigt sind, auf.
Ein derartiger Fahrzeugsitz wird in der DE 195 34 024 C2 beschrieben. Der bekannte Fahrzeugsitz ist als Sitzgruppe ausgebildet, die in der Passagierkabine eines Flugzeugs Anwendung findet. Die Sitzgruppe weist ein Traggestell auf, dass mehrere, jeweils aus einem Sitzteil und einer Rückenlehne bestehende Sitze trägt. Die Sitze sind durch eine gemeinsame Führungsschiene querverschieblich angeordnet. Eine an einem Sitzteil angeordnete Koppeleinrichtung ist mittels einer Relativbewegung eines sitzspezifischen Bauteils betätigbar und steht mit einem an dem Sitzteil angeordneten Führungselement in Wirkverbindung. Bei Betätigung der Koppeleinrichtung bewegt sich das Führungselement mit dem zugeordneten Sitz auf der Führungsschiene. Die danach über eine verschiebbare Anordnung der Sitze verfügende Sitzgruppe ermöglicht eine variable Anpassung der in einem Flugzeug zur Verfügung stehenden Verkehrsfläche. Nachteilig bei der bekannten Sitzgruppe ist eine verhältnismäßig hohe Anzahl an Bauteilen und eine sich daraus ergebende aufwendige Montage.

Ein Fahrzeugsitz wird weiterhin in der DE 36 38 231 A1 beschrieben. Sowohl die Rückenlehne als auch das Sitzteil dieses in erster Linie als Fluggastsitz dienenden Fahrzeugsitzes sind verstellbar angeordnet. Die Rückenlehne und das Sitzteil sind durch einen doppelarmigen Hebel derart miteinander gekoppelt, dass das Sitzteil bei einem Verstellen der Rückenlehne nach hinten in einem der Rückenlehne zugewandten hinteren Abschnitt abgesenkt und in einem vorderen Abschnitt nahezu unverändert bleibt. Auf diese Weise ergibt sich ein relativ hoher Komfort für eine den Fahrzeugsitz benutzende Person. Als Nachteil bei dem bekannten Fahrzeugsitz hat sich eine in konstruktiver Hinsicht verhältnismässig aufwendige und schwergewichtige Ausgestaltung erwiesen. Nachteilig ist zudem, dass, wenn mehrere Fahrzeugsitze nebeneinander und hintereinander angeordnet werden, wie dies bei der Verwendung als Fluggastsitz gewöhnlich der Fall ist, eine Reinigung aufgrund des in der Regel knapp bemessenen Freiraums zwischen den Fahrzeugsitzen erschwert ist.

Aus der DE 100 52 591 A ist ferner ein Fluggastsitz für eine Flugzeugpassagiermaschine bekannt, der ein Sitzgestell, eine Sitzfläche und eine Rückenlehne aufweist, und bei dem mindestens ein Verstellmechanismus zum Einstellen von Sitzpositionen vorgesehen ist. Insbesondere ist offenbart, einen hinter der Rückenlehne gebildeten Zwischenbereich für die Passagiernutzung zu vergrößern, indem die Parkposition der Rückenlehne über eine Normalposition hinaus in Richtung der Vorderkante der Sitzfläche vorneigbar ausgebildet ist.

Außerdem ist aus der GB 2 337 925 A ein Klappmechanismus für einen Fahrzeugsitz bekannt, der einen Stift aufweist, an dem sowohl die Rückenlehne als auch das Sitzteil des Fahrzeugsitzes gelagert sind.

Der Erfindung liegt die Aufgabe zugrunde, einen Fahrzeugsitz dahingehend weiterzubilden, dass sich bei einer guten Zugänglichkeit eine vergleichsweise geringe Anzahl an Bauteilen erzielen lässt, die sowohl eine einfach Montage als auch eine kompakte Bauweise gewährleistet.

Zur Lösung dieser Aufgabe ist bei einem Fahrzeugsitz in Übereinstimmung mit Anspruch 1 erfindungsgemäss ein Tragbolzen vorgesehen, der an einem ersten Endabschnitt in einer an den Sitzteilern angeordneten Lagerbuchse drehbar gelagert und an einem zweiten Endabschnitt drehfest an der Rückenlehne gelagert ist. Die Rückenlehne ist gegen die Wirkung einer Federkraft einer Feder verstellbar an den Sitzteilern angeordnet, wobei die Feder am Tragbalken befestigt und mit einem Verstellhebel verbunden ist und weiterhin der Verstellhebel drehfest mit dem ersten Endabschnitt des Tragbolzens gekoppelt ist. Das Sitzteil ist insbesondere mit Tragarmen versehen. In einem Tragarm ist ein zwischen den Endabschnitten befindlicher Mittelabschnitt des Tragbolzen drehbar gelagert.

Der auf diese Weise als Klappsitz ausgebildete Fahrzeugsitz gewährleistet vorzugsweise bei einem Klappsitz eine gute Zugänglichkeit ohne störende Komponenten, und zwar auch dann, wenn mehrere Fahrzeugsitze in einem verhält-engen Abstand hintereinander angeordnet sind. Infolge der guten Zugänglichkeit ist sowohl eine einfache Reinigung als auch ein bequemes Hinsetzen sichergestellt. Der erfindungsgemäße Fahrzeugsitz eignet sich somit in besonderem Maße als Fluggastsitz. Darüber hinaus zeichnet sich der erfindungsgemäße Fahrzeugsitz durch eine vergleichsweise geringe Anzahl an Bauteilen aus, die zu einer einfachen Montage und einer kompakten Bauweise beitragen. Grund hierfür ist die Ausgestaltung des Tragbolzens, die ermöglicht, das Sitzteil und die Rückenlehne gelenkig mit den Sitzteilern des Sitzgestells zu verbinden. Der Tragbolzen bewirkt somit eine funktionelle Integration, die eine vergleichsweise geringe Anzahl an Bauteilen sicherstellt. Die in ihrer Neigung verstellbare Rückenlehne kann auf diese Weise bequem und schnell von einer zurückgelehnten Stellung in die Ausgangsstellung gebracht werden.

Vorteilhafte Weiterbildungen des erfindungsgemäßen Fahrzeugsitzes stellen die Gegenstände der abhängigen Ansprüche 2 bis 14 dar.

In einer vorteilhaften Ausgestaltung des erfindungsgemäßen Fahrzeugsitzes ist die Feder auf einer Konsole, die an dem Tragbalken befestigt ist, angeordnet und mit einem Verstellhebel, der drehfest mit dem ersten Endabschnitt des Tragbolzens gekoppelt ist, verbunden. Die Anordnung der Feder auf der Konsole trägt zu einer einfachen Ausgestaltung und damit kostengünstigen Fertigung des Tragbalkens bei. Der Verstellhebel ermöglicht eine Drehung des Tragbolzens. Aufgrund der Verbindung des Verstellhebels mit der Feder läßt sich der Tragbolzen und damit die Rückenlehne gegen die Wirkung der Feder verstellen.

Eine beanspruchungsgerechte Ausgestaltung des Tragbalkens ergibt sich dann, wenn der Tragbalken vorteilhafterweise im Querschnitt rund, vorzugsweise oval, ausgebildet ist. Vor allem ein ovaler Querschnitt des zweckmäßigerweise als Hohlprofil ausgestalteten Tragbalkens, bei dem die größere Halbachse horizontal verläuft, ergibt ein in Hinsicht auf die bei dem Fahrzeugsitz auftretenden Belastungen günstiges Widerstandsmoment.

Um den Tragbalken möglichst leichtgewichtig zu konzipieren, ist es von Vorteil, den Tragbalken aus einem kohlefaserverstärkten Kunststoff (CfK) zu fertigen. Ein kohlefaserverstärkter Kunststoff verfügt bei einer relativ geringen Dichte über eine hohe Festigkeit. Die Gestellfüße und/oder die Sitzteile und/oder die Konsolen dagegen sind bevorzugt aus Aluminium gefertigt, insbesondere gefräst, und vorzugsweise durch eine Klemmverbindung an dem Tragbalken befestigt. Die Verwendung von Aluminium stellt bei einem vergleichsweise geringen Gewicht eine hohe Festigkeit des Sitzgestells sicher. Aufgrund der Klemmverbindung ist eine zuverlässige Befestigung der Gestellfüße, der Sitzteiler und der Konsolen an dem Tragbalken auch bei unterschiedlichen Materialien gewährleistet.

In einer bevorzugten Weiterbildung des erfindungsgemäßen Fahrzeugsitzes weist das Sitzteil einen Sitzkasten auf, der vorzugsweise aus einem kohlefaserverstärkten Kunststoff gefertigt und mit einem Polster aus einem elastischen Werkstoff versehen ist. Der Sitzkasten verleiht dem Sitzteil eine hohe Festigkeit, wohingegen das Polster zu einem hohen Komfort einer den Fahrzeugsitz benutzenden Person beiträgt.

Um besonders bei der Verwendung des erfindungsgemäßen Fahrzeugsitzes als Fluggastsitz einem Passagier im Falle eines Crashes einen guten Rückhalt zu gewährleisten, weist der Sitzkasten vorteilhafterweise eine obere Fläche auf, die mit einer rampenförmigen Vertiefung versehen ist. Die Vertiefung stellt eine sogenannte Anti-Submarining-Rampe dar, die ein übermäßiges Nach-vorne-Rutschen eines Passagiers im Falle eines Crashes verhindert.
Von Vorteil ist außerdem, den Sitzkasten mit einem Staufach zu versehen.

In einer bevorzugten konstruktiven Ausgestaltung des erfindungsgemäßen Fahrzeugsitzes weist der Sitzkasten eine Aussparung auf, die an die Kontur des Tragbalkens angepaßt ist und in welcher der Sitzkasten in der Sitzposition des Sitzteils auf dem Tragbalken aufliegt. Ist der Tragbalken im Querschnitt oval ausgestaltet, hat die Aussparung danach eine im wesentlichen muldenförmige Kontur. Der auf dem Tragbalken in der zweiten Stellung aufliegende Sitzkasten wird zum einen wirksam abgestützt. Zum anderen dient der Tragbalken somit als Anschlag für den mittels der Tragarme schwenkbar aufgehängten Sitzkasten, wodurch das Sitzteil in der zweiten Stellung lagegenau positioniert wird und die Tragbolzen entlastet werden.

In Weiterbildung des erfindungsgemäßen Fahrzeugsitzes wird überdies vorgeschlagen, daß der Sitzkasten eine Aussparung für die Feder und die Konsolen aufweist. Auf diese Weise beeinträchtigen die an dem Tragbalken befestigten Konsolen nicht den Schwenkbereich eines als Klappsitz ausgebildeten Sitzteiles.

Schließlich wird vorgeschlagen, daß der erfindungsgemäße Fahrzeugsitz vorteilhafterweise jeweils mehrere, vorzugsweise drei, Sitzteile und Rückenlehnen aufweist, die nebeneinander auf dem Tragbalken angeordnet sind. Der Fahrzeugsitz stellt auf diese Weise eine Sitzbank dar, wie sie in der Regel in Flugzeugen Anwendung findet.

Es ist in einer bevorzugten Ausgestaltung vorgesehen, dass die dem Gang zugewandten Sitz dazugehörige Feder zur Verstellung der Rückenlehne am Tragbalken im Bereich des Mittelsitzes angeordnet ist. Damit ist vorteilhaft erreicht, dass dieses Bauteil bei der Anordnung eines gangseitigen Klappsitzes nicht störend ist, wenn ein hochgeklapptes Sitzteil eine verbesserte Zugänglichkeit ermöglicht.

Einzelheiten und weitere Vorteile des Fahrzeugsitzes gemäß der vorliegenden Erfindung ergeben sich aus der nachfolgenden Beschreibung eines bevorzugten Ausführungsbeispieles. In den das Ausführungsbeispiel schematisch darstellenden Zeichnungen veranschaulichen im einzelnen:

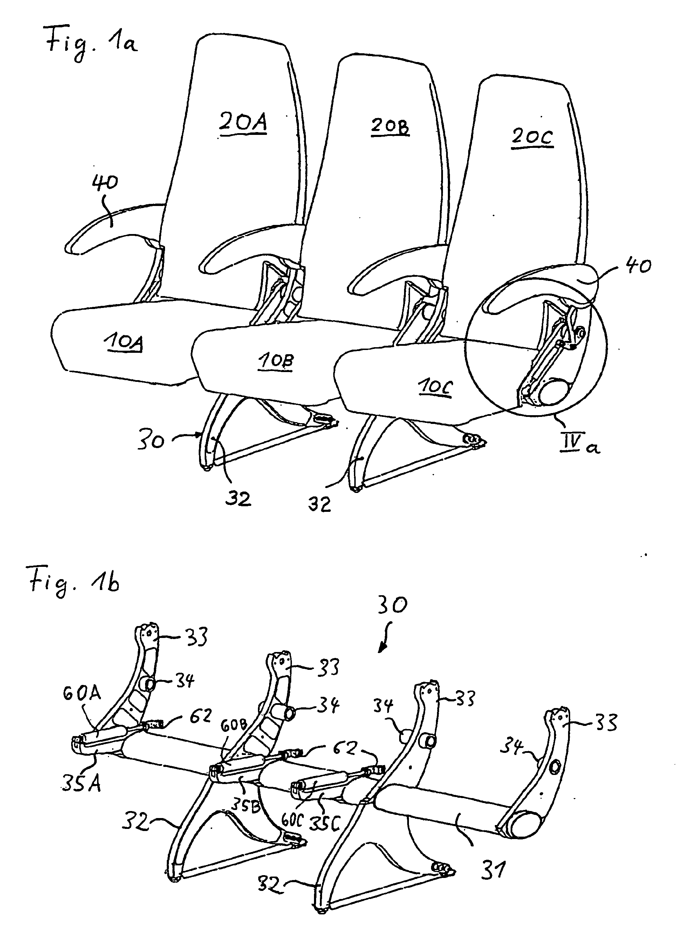

- Fig. 1a: eine perspektivische Ansicht eines erfindungsgemäßen Fluggastsitzes, der als drei Sitze aufweisende Sitzbank ausgebildet ist;
- Fig. 1 b: eine perspektivische Ansicht des Sitzgestells des Fluggastsitzes gemäß Fig. 1a;
- Fig. 2a: eine rückwärtige Ansicht des Sitzgestells gemäß Fig. 1 b mit montierten Rückenlehnen;
- Fig. 2b: eine vergrößerte Darstellung des in Fig. 2a mit IIb gekennzeichneten Bereichs;
- Fig. 2c: eine Explosionsdarstellung der Befestigung der Rückenlehne an dem Sitzgestell;
- Fig. 2d: eine perspektivische Ansicht eines die Rückenlehne verstellenden Mechanismus;
- Fig. 3a: eine perspektivische Ansicht des Sitzgestells gemäß Fig. 1 b mit montierten Sitzteilen;
- Fig. 3b: eine Einzeldarstellung eines Sitzteiles;
- Fig. 3c: eine Darstellung gemäß Fig. 3b bei mit einem Polster versehenem Sitzteil;
- Fig. 3d: eine Explosionsdarstellung der Befestigung eines Sitzteils;
- Fig. 4a: eine vergrößerte Darstellung des in Fig. 1a mit IVa gekennzeichneten Bereichs;
- Fig. 4b: eine Explosionsdarstellung der Befestigung eines Schwenkhebels;
- Fig. 4c: eine den Verstellmechanismus einer Armlehne zeigende Seitenansicht;
- Fig. 5a: eine Ansicht gemäß Fig. 1a bei einem hochgeklappten Sitzteil;
- Fig. 5b: eine Darstellung der unterschiedlichen Stellungen von Sitzteil und Armlehne und
- Fig. 5c: eine Seitenansicht von mehreren hintereinander angeordneten Fluggastsitzen, die den Freiraum zwischen den Fluggastsitzen bei einerseits heruntergeklappten und andererseits hochgeklappten Sitzteil und Armlehne veranschaulichen.

Der in Fig. 1a dargestellte Fluggastsitz ist als mehreren Passagieren Platz bietende Sitzbank ausgebildet. Die Sitzbank weist ein Sitzgestell 30 auf, an dem nebeneinander jeweils drei Sitzteile 10A, 10B und 10C und Rückenlehnen 20A, 20B und 20C angeordnet sind. Wie insbesondere Fig. 1b erkennen läßt, weist das Sitzgestell 30 einen freitragenden Tragbalken 31 auf, der auf Gestellfüßen 32 abgestützt ist. Weiterhin ist das Sitzgestell 30 mit Sitzteilern 33 versehen, welche die Rückenlehnen 20 seitlich einfassen. Der im Querschnitt im wesentlichen oval ausgebildete Tragbalken 31 ist aus einem kohlefaserverstärkten Kunststoff gefertigt, wohingegen sowohl die Gestellfüße 32 als auch die Sitzteiler 33 aus Aluminium gefräst sind. Aufgrund der unterschiedlichen Materialien sind die Gestellfüße 32 und die Sitzteiler 33 vorzugsweise durch eine Klemmverbindung an dem Tragbalken 31 befestigt. Die Sitzteiler 33 können zu diesem Zweck mit den Gestellfüßen 32 verbunden sein, wie aus Fig. 1 b ersichtlich ist.

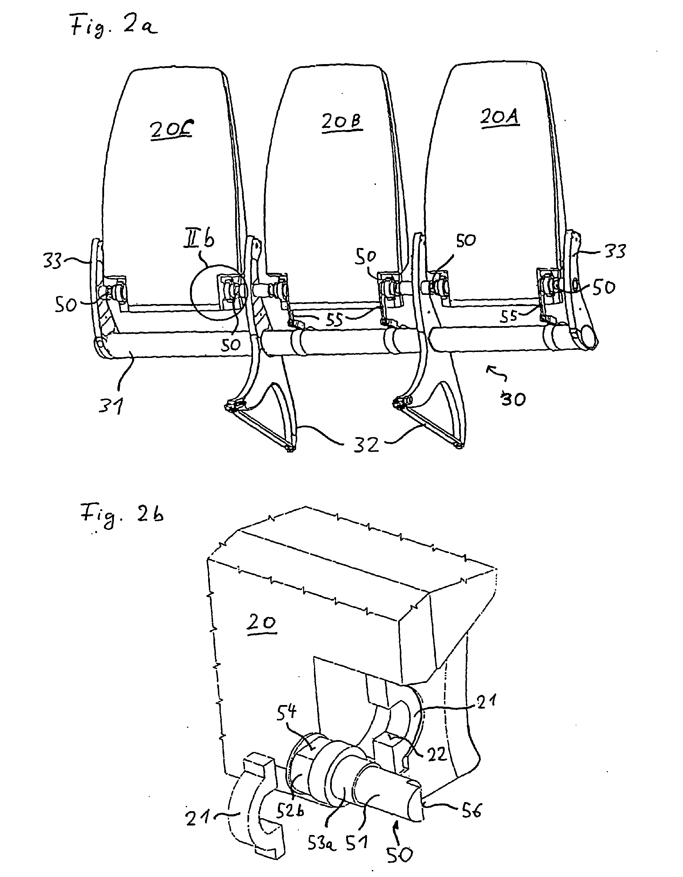

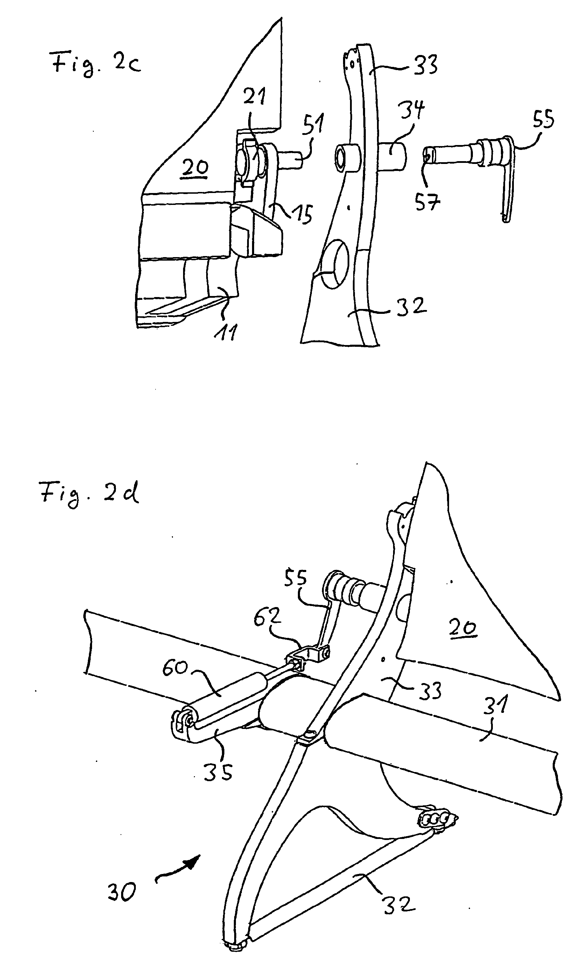

In den Fig. 2a bis 2d ist die Befestigung der Rückenlehnen 20A, 20B, 20C (im folgenden mit Bezugszeichen 20 bezeichnet) an dem Sitzgestell 30 gezeigt. Wie aus Fig. 2a ersichtlich, ist die Rückenlehne 20 in ihrer Neigung verstellbar an dem Sitzgestell 30 angeordnet. Zu diesem Zweck finden Tragbolzen 50 Anwendung, die ein Schwenken der Rückenlehne 20 gestatten. Die Tragbolzen 50 sind an einem ersten Endabschnitt 51 in einer an den Sitzteilern 33 angeordneten Lagerbuchse 34 drehbar gelagert, wie die Fig. 2b und 2c erkennen lassen. Ein dem ersten Endabschnitt 51 gegenüberliegender zweiter Endabschnitt 52b ist drehfest mit einer an der Rückenlehne 20 angeordneten Lagerschelle 21 verbunden. Zu diesem Zweck weist die Lagerschelle 21 Abflachungen 22 auf, die formschlüssig mit Abflachungen 54 des zweiten Endabschnitts 52b verbunden sind. Weiterhin ist der erste Endabschnitt 51 drehfest mit einem Verstellhebel 55 gekoppelt, dessen Auslenkung demzufolge ein Verschwenken der Rückenlehnen 20 hervorruft. Für die drehfeste Koppelung von erstem Endabschnitt 51 und Verstellhebel 55 sind Abflachungen 56, 57 vorgesehen, die im Inneren der Lagerbuchse 34 einen Formschluß zwischen erstem Endabschnitt 51 und Verstellhebel 55 bewirken.

Wie aus Fig. 2d ersichtlich, ist der Verstellhebel 55 mittels eines Verbindungsstücks 62 mit einer Gasfeder 60 verbunden. Die Gasfeder 60 ist auf einer aus Aluminium gefrästen Konsole 35 angeordnet, die durch eine Klemmverbindung an dem Tragbalken 31 befestigt ist. Auf diese Weise läßt sich die Rückenlehne 20 gegen die Wirkung der Gasfeder 60 in ihrer Neigung verstellen. Für die Verstellung der Rückenlehne 20 kann in an sich bekannter Weise ein nicht dargestellter Antrieb, der beispielsweise an dem Verbindungsstück 62 angreift, vorgesehen sein.

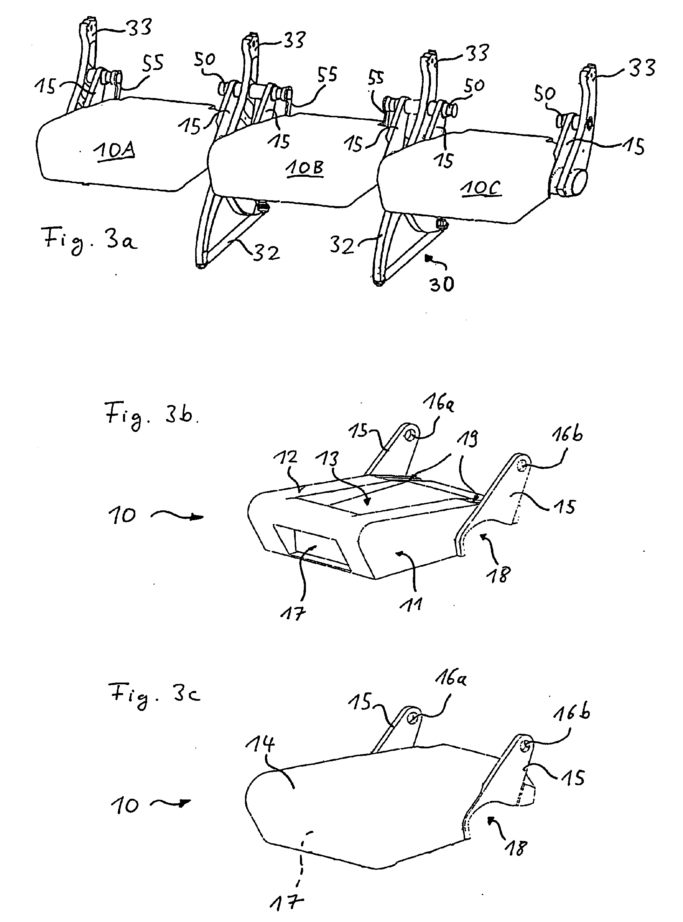

In den Fig. 3a bis 3d ist die Befestigung des Sitzteile 10A, 10B, 10C (im folgenden mit Bezugszeichen 10 bezeichnet) an dem Sitzgestell 30 dargestellt. Wie besonders Fig. 3b erkennen läßt, weist das Sitzteil 10 einen Sitzkasten 11 auf, der aus einem kohlefaserverstärkten Kunststoff gefertigt ist. Der Sitzkasten 11 ist an einer oberen Fläche 12 mit einer rampenförmigen Vertiefung 13 versehen, die als sogenannte Anti-Submarining-Rampe einem übermäßigen Nachvorne-Rutschen eines den Fluggastsitz benutzenden Passagiers entgegenwirkt. Der Sitzkasten 11 ist ferner mit einem Staufach 17 versehen, in dem sich beispielsweise eine Rettungsweste verstauen läßt. Der Sitzkasten 11 trägt auf seiner oberen Fläche 12 ein Polster 14, das in herkömmlicher Weise mit einem Bezug bespannt ist. Der Bezug verdeckt das Staufach 17, wie in Fig. 3c zu erkennen ist. Um eine in dem Staufach 17 verstaute Rettungsweste ohne weiteres herausnehmen zu können, ist der Bezug mit einer nicht dargestellten Reißleine versehen, durch die im Bedarfsfall der Bezug vor dem Staufach 17 ohne weiteres entfernt werden kann.

An den Sitzkasten 11 sind seitlich Tragarme 15 angeformt, die schwenkbar an den Sitzteilern 33 angelenkt sind. Zu diesem Zweck sind die Tragarme 15 mit Öffnungen 16a, 16b versehen, in denen ein Mittelabschnitt 53a, 53b der Tragbolzen 50 drehbar gelagert ist. Das Sitzteil 10 ist auf diese Weise um die sich in horizontaler Richtung erstreckenden Tragbolzen 50 von einer ersten, annähernd vertikalen Stellung I in eine zweite, annähernd horizontale Stellung II klappbar.

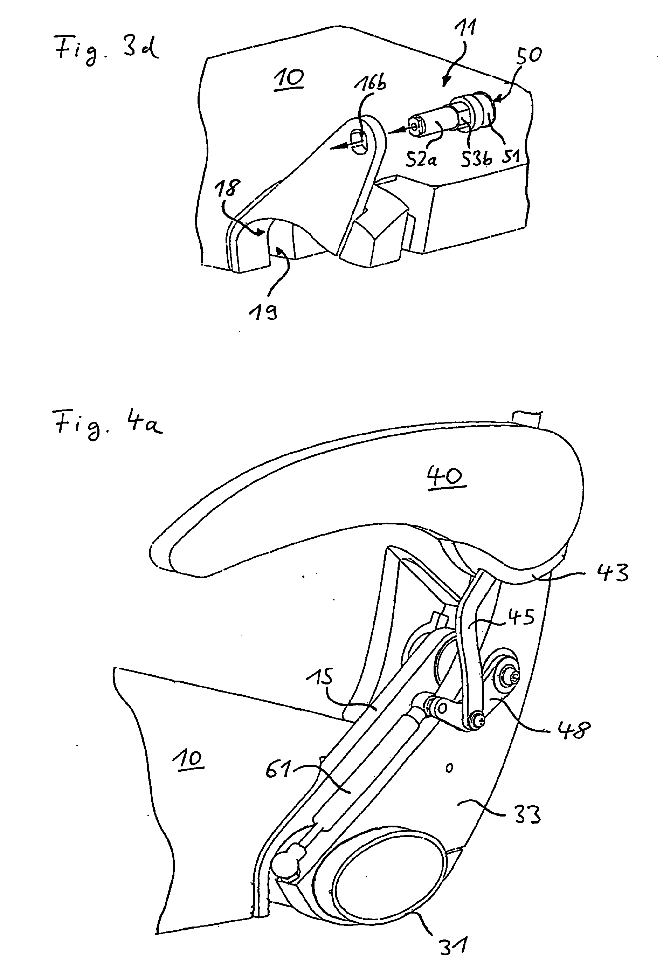

Der in Fig. 3a rechte Tragarm 15 weist im Unterschied zu den übrigen Tragarmen 15 eine Öffnung 16b auf, die mit Abflachungen versehen ist. Wie aus Fig. 3d ersichtlich, weist dementsprechend der Mittelabschnitt 53b des sich durch die Öffnung 16b hindurch erstreckenden Tragbolzens 50 gleichfalls Abflachungen auf, die einen Formschluß zwischen dem Tragbolzen 50 und dem Tragarm 15 hervorrufen. Durch eine Drehung des Tragbolzens 50 wird somit das in Fig. 3a rechte Sitzteil 10 von der ersten Stellung I in die zweite Stellung II geklappt, wohingegen die beiden anderen Sitzteile 10 durch Angreifen an dem Sitzkasten 11 zu klappen sind.

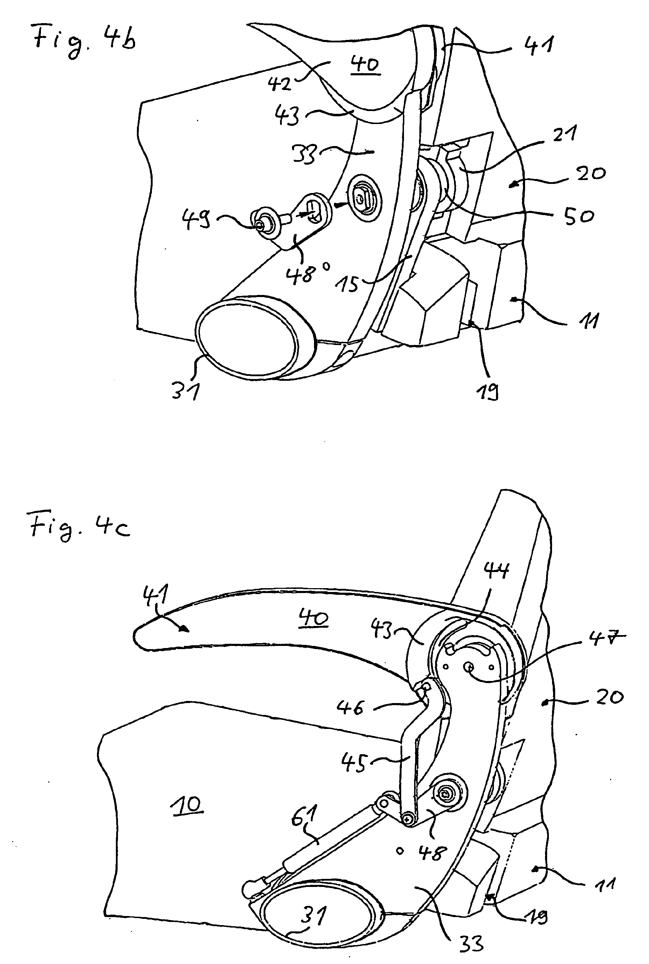

In den Fig. 4a bis 4c ist die Anordnung einer schwenkbaren Armlehne 40 an den Sitzteilern 33 dargestellt. Die Armlehne 40 setzt sich aus einer Unterschale 41 und einer Oberschale 42 zusammen, die das obere Ende der Sitzteiler 33 umgreifen, wie aus Fig. 4b ersichtlich ist. Die Armlehne 40 ist dabei mittels eines Gelenkbolzens 47 drehbar an den Sitzteilern 33 gelagert. Um die Gefahr von Quetschungen zu vermeiden, ist im Bereich des oberen Endes der Sitzteiler 33 eine Abdeckung 43 vorgesehen, die einen zum Schwenken der Armlehne 40 unvermeidlichen Spalt zwischen der Unterschale 41 und der Oberschale 42 verdeckt.

Im Inneren der Armlehne 40 ist eine Kulisse 44 angeordnet, die einen verschiebbaren Drehpunkt für eine mittels eines Führungsbolzens 46 in der Kulisse 44 geführte Koppelstange 45 bildet. Die Koppelstange 45 ist an einem Schwenkhebel 48 angelenkt, der drehfest mit dem ersten Endabschnitt 51 des Tragbolzens 50 des in den Fig. 1a und 3a rechten Sitzes gekoppelt ist. Für die drehfeste Kopplung ist der erste Endabschnitt 51 formschlüssig mit dem Schwenkhebel 48 verbunden, wie vor allem in Fig. 4b zu erkennen ist. Die axiale Sicherung von Schwenkhebel 48 und erstem Endabschnitt 51 übernimmt eine Schraube 49, die von außen in eine Bohrung des ersten Endabschnittes 51 geschraubt ist.

Der Schwenkhebel 48 ist an seinem dem ersten Endabschnitt 51 gegenüberliegenden Ende mit einer Gasfeder 61 verbunden, die auf dem Sitzteiler 33 angeordnet ist. Die Gasfeder 61 bewirkt, daß der Tragbolzen 50 und damit das mit diesem formschlüssig verbundene Sitzteil 10 gegen die durch die Gasfeder 61 hervorgerufene Rückstellkraft von der vertikalen Stellung I in die horizontale Stellung II klappbar ist. Auf diese Weise befindet sich das Sitzteil 10 stets in der vertikalen Stellung 1, wenn der Sitz unbesetzt ist.

Aufgrund der Koppelstange 45 folgt die Armlehne 40 der Bewegung des Sitzteils 10. Ein Schwenken der Armlehne 40 unabhängig von dem Sitzteil 10 ist durch die Kulisse 44 gewährleistet. Das bedeutet, daß die Armlehne 40 bei heruntergeklapptem Sitzteil 10 in eine vertikale Stellung verschwenkt werden kann, um beispielsweise einer den Sitz benutzenden Person ein einfaches Aufstehen zu gestatten.

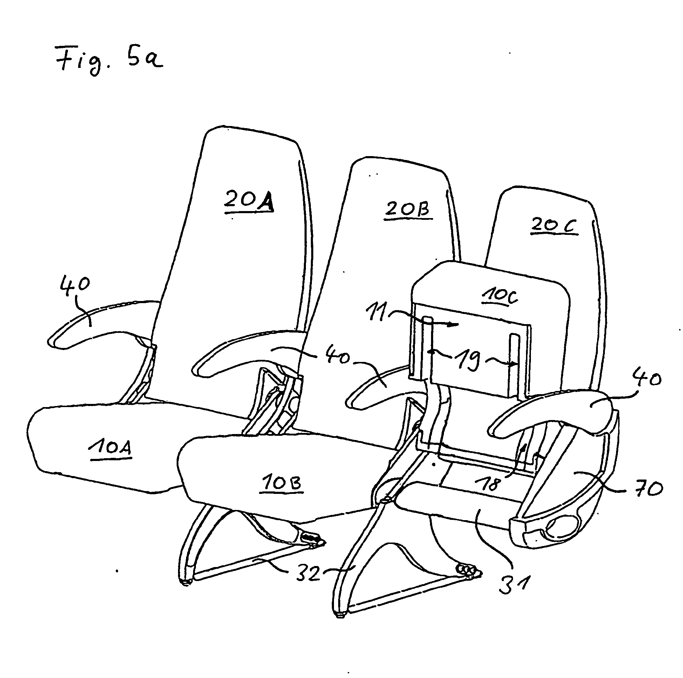

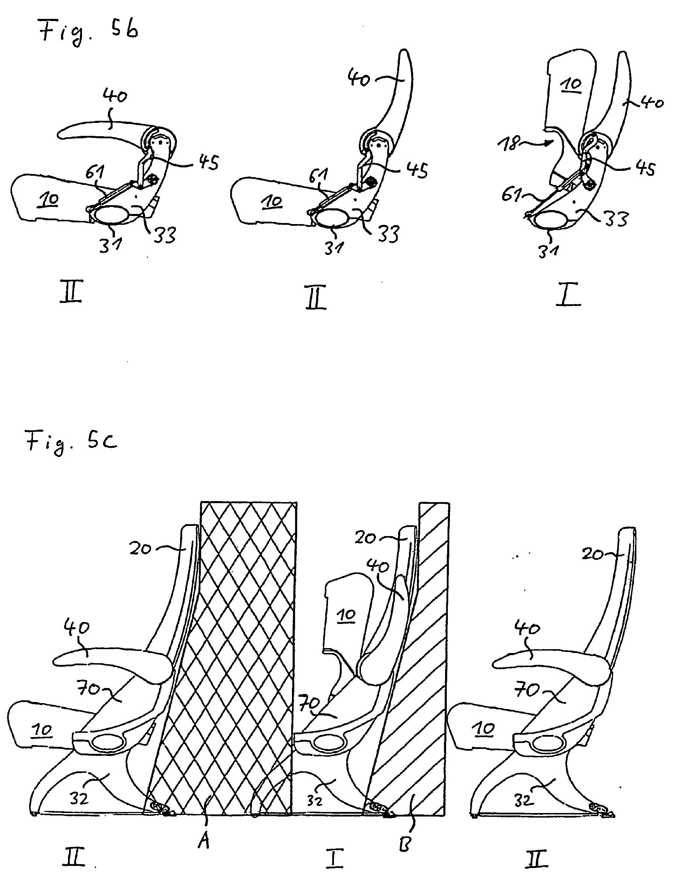

Die verschiedenen Stellungen, die das Sitzteil 10 und die Armlehne 40 einnehmen können, sind besonders deutlich in den Fig. 5a bis 5c zu erkennen. Vor allem Fig. 5b macht deutlich, daß die Armlehne 40 unabhängig von dem Sitzteil 10 hochgeklappt werden kann. In Fig. 5c ist der sich durch das Hochklappen von Sitzteil 10 und Armlehne 40 ergebende Raumgewinn zwischen hintereinander angeordneten Sitzbänken dargestellt. So ist der Freiraum B zwischen zwei hintereinander angeordneten Sitzbänken bei heruntergeklapptem Sitzteil 10 und Armlehne 40 signifikant geringer als der Freiraum A bei hochgeklapptem Sitzteil 10 und Armlehne 40. Der Freiraum A gewährleistet somit eine gute Zugänglichkeit, die sowohl eine einfache Reinigung als auch ein bequemes Hinsetzen sicherstellt. Zu diesem Zweck hat es sich in der Praxis als ausreichend erwiesen, lediglich den dem Gang zugewandten Sitz mit einer Gasfeder 61 zu versehen, die ein selbsttätiges Hochklappen des Sitzteiles 10C in die vertikale Stellung I hervorruft. Für die beiden übrigen Sitze ist es ausreichend, wenn das Sitzteil 10 etwa zu Reinigungszwecken manuell von der horizontalen Stellung II in die vertikale Stellung I geklappt wird. Indem jedoch der gangseitige Sitz selbsttätig in die vertikale Stellung I schwenkt, ergibt sich zudem die Möglichkeit, den auf diese Weise freiliegenden Tragbalken 31 als Tritt zu benutzen, um beispielsweise Gepäck in den in einem Flugzeug üblicherweise über den Sitzen befindlichen Ablagefächern zu verstauen, wie besonders aus Fig. 5a ersichtlich ist.

Fig. 5a i.V.m. Fig. 1 b läßt zudem erkennen, daß im Bereich des gangseitigen Sitzes 10C keine die Zugänglichkeit beeinträchtigende Konsole 35C für die Gasfeder 60C angeordnet ist. Die eine Verstellung der Rückenlehne 20C des gangseitigen Sitzes bewirkende Gasfeder 60C ist auf einer Konsole 35C angeordnet, die sich im Bereich des mittleren Sitzes 20B befindet, wie die Fig. 1 b und 2a erkennen lassen. Die Konsolen 35 einschließlich der auf diesen befindlichen Gasfedern 60 kommen bei in die horizontale Stellung II geklapptem Sitzteil 10 in Aussparungen 19 zu liegen, die an der Unterseite des Sitzkastens 11 vorgesehen sind, wie aus den Fig. 3b und 5a ersichtlich ist. Der Schwenkbereich des Sitzteiles 10 wird somit durch die Konsolen 35 nicht beeinträchtigt. An der Unterseite des Sitzkastens 11 ist ferner eine Aussparung 18 vorhanden, die an die Kontur des Tragbalkens 31 angepaßt ist. In der Aussparung 18 liegt der Sitzkasten 11 in der horizontalen Stellung II des Sitzteiles 10 auf dem Tragbalken 31 auf, wie beispielsweise aus Fig. 5b zu entnehmen ist. Die über eine im wesentlichen muldenförmige Kontur verfügende Aussparung 18 dient zum einen als Anschlag für den Sitzkasten 11, wodurch das Sitzteil 10 in der horizontalen Stellung II lagegenau positioniert wird. Eine Positionierung des Anschlages kann, wie in Fig. 3b gezeigt, seitlich des Sitzteiles vorgesehen sein oder in einer nicht gezeigten Variante auch unterhalb des Sitzteiles 10. Zum anderen wird das Sitzteil 10 in der Aussparung 18 auf dem Tragbalken 31 abgestützt, so daß die Tragbolzen 50 in der üblicherweise belasteten, horizontalen Stellung II des Sitzteiles 10 entlastet werden. Die Tragbolzen 50 können somit geringer dimensioniert werden oder ohne weiteres zusätzlich belastet werden, beispielsweise durch auf der Rückseite der Rückenlehnen 20 befindliche Klapptische, die schwenkbar an den Tragbolzen 50 angelenkt sind.

Der zuvor beschriebene Fluggastsitz zeichnet sich durch eine vergleichsweise einfache und leichtgewichtige Konstruktion aus. Grund hierfür ist zum einen die Verwendung von Materialien, wie beispielsweise Aluminium oder CfK, die bei vergleichsweise geringer Dichte über eine hohe Festigkeit verfügen. Zum anderen ermöglicht die Zuordnung mehrerer Funktionen zu den einzelnen Bauteilen, wie beispielsweise die gleichzeitige Lagerung des Sitzteiles 10 und der Rückenlehnen 20 durch die Tragbolzen 50, eine geringe Anzahl an Bauteilen, die sowohl eine schnelle Montage als auch eine kompakte und modulare Bauweise gewährleisten. Weiterhin ist der oben beschriebene Fluggastsitz durch die Ausbildung als relativ gut zugängliche Sitzbank gekennzeichnet. Ursache hierfür ist in erster Linie die schwenkbare Anordnung des Sitzteiles 10. Der auf diese Weise als Klappsitz ausgebildete Fluggastsitz bietet im hochgeklappten Zustand des Sitzteiles 10 einen relativ großen Freiraum A zwischen zwei hintereinander angeordneten Sitzbänken. Das selbsttätige Hochklappen des gangseitigen Sitzes der Sitzbank im unbesetzten Zustand stellt ein bequemes Durchkommen durch den Gang des Flugzeuges sicher. Nicht zuletzt trägt der oben beschriebene Fluggastsitz einer unfallverhütenden Ausgestaltung Rechnung, indem potentielle Gefährdungen eines Passagiers, beispielsweise durch Quetschungen, durch das Vorsehen der Abdeckung 43 oder einer in den Fig. 5a und 5c zu erkennenden Verkleidung 70 der Sitzteiler 33 begegnet wird.

### Bezugszeichenliste

- 10: Sitzteil
- 11: Sitzkasten
- 12: obere Fläche
- 13: Vertiefung
- 14: Polster
- 15: Tragarm
- 16a: Öffnung
- 16b: Öffnung
- 17: Staufach
- 18: Aussparung
- 19: Aussparung

- 20: Rückenlehne
- 21: Lagerschelle
- 22: Abflachung

- 30: Sitzgestell
- 31: Tragbalken
- 32: Gestellfuß
- 33: Sitzteiler
- 34: Lagerbuchse
- 35: Konsole

- 40: Armlehne
- 41: Unterschale
- 42: Oberschale
- 43: Abdeckung
- 44: Kulisse

- 45: Koppelstange
- 46: Führungsbolzen
- 47: Gelenkbolzen
- 48: Schwenkhebel
- 49: Schraube

- 50: Tragbolzen
- 51: erster Endabschnitt
- 52a: zweiter Endabschnitt
- 52b: zweiter Endabschnitt
- 53a: Mittelabschnitt
- 53b: Mittelabschnitt
- 54: Abflachung
- 55: Verstellhebel
- 56: Abflachung
- 57: Abflachung

- 60: Gasfeder
- 61: Gasfeder
- 62: Verbindungsstück

- 70: Verkleidung

- A: Freiraum
- B: Freiraum
- I: vertikale Stellung
- II: horizontale Stellung

## Patentansprüche

1. Fahrzeugsitz, insbesondere Fluggastsitz, mit einem **klappbaren** Sitzteil (10), und einer Rückenlehne (20), die an einem Sitzgestell (30) angeordnet sind, wobei das Sitzteil (10) mit **Tragarmen (15) versehen ist, und** wobei das Sitzgestell (30) mindestens einen freitragenden Tragbalken (31), der auf Gestellfüßen (32) abgestützt ist, und wenigstens zwei die Rückenlehne (20) einfassende Sitzteiler (33), die an dem Tragbalken (31) befestigt sind, aufweist, wobei ein Tragbolzen (50) an einem ersten Endabschnitt (51) in einer an den Sitzteilern (33) angeordneten Lagerbuchse (34) drehbar gelagert und an einem zweiten Endabschnitt (52a, 52b) drehfest in der Rückenlehne (20) gelagert ist, **dadurch gekennzeichnet, dass der Tragbolzen (50) einen zwischen den beiden Endabschnitten (51; 52a, 52b) befindlichen Mittelabschnitt (53a, 53b) aufweist, der in einem Tragarm (15) des Sitzteils (10) drehbar gelagert ist, und wobei** die Rückenlehne (20) gegen die Wirkung einer Feder (60), vorzugsweise einer Gasfeder, verstellbar an den Sitzteilern (33) angeordnet ist und die Feder (60) am Tragbalken (31) befestigt und mit einem Verstellhebel (55) verbunden ist und weiterhin der Verstellhebel (55) drehfest mit dem ersten Endabschnitt (51) des Tragbolzens (50) gekoppelt ist.

2. Fahrzeugsitz nach Anspruch 1, **dadurch gekennzeichnet, dass** die Feder (60) auf einer an dem Tragbalken (31) befestigten Konsole (35) angeordnet ist.

3. Fahrzeugsitz nach Anspruch 2, **dadurch gekennzeichnet, dass** die Feder (60) derart auf der Konsole (35) befestigt ist, dass die Federkraft am Verstellhebelende (55), vorzugsweise am Verbindungsstück (62) angreift.

4. Fahrzeugsitz nach einem der Ansprüche 1 bis 3, **dadurch gekennzeichnet, dass** an der Rückenlehne (20) eine Lagerschelle (21) angeordnet ist, mit der der zweite Endabschnitt (52b) des Tragbolzens (50) verbunden ist.

5. Fahrzeugsitz nach einem der Ansprüche 1 bis 4, **dadurch gekennzeichnet, dass** der Tragbalken (31) im Querschnitt rund, vorzugsweise oval, ausgebildet ist.

6. Fahrzeugsitz nach einem der Ansprüche 1 bis 5, **dadurch gekennzeichnet, dass** der Tragbalken (31) aus einem kohlefaserverstärkten Kunststoff gefertigt ist.

7. Fahrzeugsitz nach einem der Ansprüche 1 bis 6, **dadurch gekennzeichnet, dass** die Gestellfüße (32) und/oder die Sitzteiler (33) und/oder die Konsolen (35) aus Aluminium gefertigt, insbesondere gefräst, und vorzugsweise durch eine Klemmverbindung an dem Tragbalken (31) befestigt sind.

8. Fahrzeugsitz nach einem der Ansprüche 1 bis 7, **dadurch gekennzeichnet, dass** das Sitzteil (10) einen Sitzkasten (11) aufweist, der vorzugsweise aus einem kohlefaserverstärkten Kunststoff gefertigt und mit einem Polster (14) aus einem elastischen Werkstoff versehen ist.

9. Fahrzeugsitz nach Anspruch 8, **dadurch gekennzeichnet, dass** der Sitzkasten (11) eine obere Fläche (12) aufweist, die mit einer rampenförmigen Vertiefung (13) versehen ist.

10. Fahrzeugsitz nach Anspruch 8 oder 9, **dadurch gekennzeichnet, dass** der Sitzkasten (11) mit einem Staufach (17) versehen ist.

11. Fahrzeugsitz nach einem der Ansprüche 8 bis 10, **dadurch gekennzeichnet, dass** der Sitzkasten (11) eine Aussparung (18) aufweist, die an die Kontur des Tragbalkens (31) angepasst ist und in welcher der Sitzkasten (11) in der Sitzposition des Sitzteils (10) auf dem Tragbalken (31) aufliegt.

12. Fahrzeugsitz nach einem der Ansprüche 8 bis 11, **dadurch gekennzeichnet, daß** der Sitzkasten (11) eine Aussparung (19) für die Feder (60) und die Konsolen (35) aufweist.

13. Fahrzeugsitz nach einem der Ansprüche 1 bis 12, **gekennzeichnet durch** jeweils mehrere, vorzugsweise drei, Sitzteile (10) und Rückenlehnen (20), die nebeneinander auf dem Tragbalken (31) angeordnet sind.

14. Fahrzeugsitz nach einem der Ansprüche 1 bis 13, **dadurch gekennzeichnet, dass** die Feder (60C) des einem Gang zugewandten Sitzes (20C) am Tragbalken (31) im Bereich des mittleren Sitzes (20B) angeordnet ist.

## Claims

1. Vehicle seat, in particular air passenger seat, with a pivotable seat part (10) and a seat back (20) which are arranged at a seat frame (30),
wherein the seat part (10) comprises supporting arms (15), and wherein the seat frame (30) comprises at least a cantilevered supporting beam (31) supported by frame legs (32) and at least two seat dividers (32) framing the seat back (20), the seat dividers (32) being mounted at the supporting beam (31),
wherein a supporting bolt (50) is pivotably mounted at a first end section (51) in a mounting bush (34) arranged at the seat dividers (33) and is mounted non-rotatably at a second end section (52a, 52b) in the seat back (20),
**characterized in that** the supporting bolt (50) comprises a middle section (53a, 53b) arranged between the said end sections (51; 52a, 52b), the middle section (53a, 53b) being mounted pivotably at a supporting arm (15) of the seat part (10), and
wherein the seat back (20) is adjustably arranged, against the effect of a spring (60), preferably a gas spring, at the seat dividers (33) and the spring (60) is mounted at the supporting beam (31) and is connected to an adjusting lever (55) and furthermore the adjusting lever (55) is connected non-rotatably to the first end section (51) of the supporting bolt (50).

2. Vehicle seat according to claim 1, **characterized in that** the spring (60) is arranged on a console (35) which is mounted at the supporting beam (31).

3. Vehicle seat according to claim 2, **characterized in that** the spring (60) is arranged on the console (35) in such a way that the spring force acts upon the end of the adjusting lever (55) preferably at the connector (62).

4. Vehicle seat according to one of claims 1 to 3, **characterized in that** at the seat back (20) a bracket clamp (21) is arranged with which the second end section (52b) of the supporting bolt (50) is connected.

5. Vehicle seat according to one of claims 1 to 4, **characterized in that** the supporting beam (31) is designed round in cross-section, preferably oval.

6. Vehicle seat according to one of claims 1 to 5, **characterized in that** the supporting beam (31) is formed from a carbon fibre reinforced plastic.

7. Vehicle seat according to one of claims 1 to 6, **characterized in that** the frame legs (32) and/or the seat dividers (33) and/or the consoles (35) are formed of aluminium, particularly by milling, and preferably mounted to the supporting beam (31) by a clamp connection.

8. Vehicle seat according to one of claims 1 to 7, **characterized in that** the seat part (10) comprises a seat box (11) which is preferably formed from a carbon fibre reinforced plastic and is provided with a pad (14) made of elastic material.

9. Vehicle seat according to claim 8, **characterized in that** the seat box (11) comprises an upper area (12) which is provided with a ramp-shaped indentation (13).

10. Vehicle seat according to one of claims 8 or 9, **characterized in that** the seat box (11) is provided with a storage compartment (17).

11. Vehicle seat according to one of claims 8 to 10, **characterized in that** the seat box (11) comprises a recess (18) which is adapted to the contour of the supporting beam (31) and in which the seat box (11) in the sitting position of the seat part (10) bears on the supporting beam (31).

12. Vehicle seat according to one of claims 8 to 11, **characterized in that** the seat box (11) comprises a recess (19) for the spring (60) and the consoles (35).

13. Vehicle seat according to one of claims 1 to 12, **characterized by** respectively several, preferably three seat parts (10) and seat backs (20) which are arranged side by side at the supporting beam (31).

14. Vehicle seat according to one of claims 1 to 13, **characterized in that** the spring (60C) of a seat (20C) facing an aisle is arranged at a supporting beam (31) in the region of the middle seat (20B).

## Revendications

1. Siège de véhicule, en particulier siège de passager d'avion, comprenant un siège rabattable (10) et un dossier (20), qui sont disposés sur une carcasse de siège (30), le siège (10) étant muni de bras supports (15), et la carcasse de siège (30) présentant au moins une barre support (31) en porte-à-faux, supportée sur des pieds de carcasse (32), et au moins deux séparateurs de sièges (33) entourant le dossier (20), qui sont fixés sur la barre support (31), un axe support (50) étant monté pivotant sur une première section extrême (51) dans un coussinet (34), disposé sur les séparateurs de sièges (33), et étant monté de façon solidaire dans le dossier (20) sur une seconde section extrême (52a, 52b), **caractérisé en ce que** l'axe support (50) présente une section centrale (53a, 53b) située entre les deux sections extrêmes (51 ; 52a, 52b), laquelle section est montée pivotante dans un bras support (15) du siège (10), le dossier (20) étant disposé avec une possibilité d'ajustement sur les séparateurs de sièges (33) contre l'effet d'un ressort (60), de préférence un ressort à gaz, le ressort (60) étant fixé sur la barre support (31) et raccordé à un levier de manoeuvre (55), et le levier de manoeuvre (55) étant en outre couplé de façon solidaire à la première section extrême (51) de l'axe support (50).

2. Siège de véhicule suivant la revendication 1, **caractérisé en ce que** le ressort (60) est disposé sur une console (35) fixée sur la barre support (31).

3. Siège de véhicule suivant la revendication 2, **caractérisé en ce que** le ressort (60) est fixé sur la console (35) de telle sorte que la force de ressort agit sur l'extrémité du levier de manoeuvre (55), de préférence sur le raccord (62).

4. Siège de véhicule suivant l'une des revendications 1 à 3, **caractérisé en ce qu'**un collier d'appui (21), avec lequel est assemblée la seconde section extrême (52b) de l'axe support (50), est disposé sur le dossier (20).

5. Siège de véhicule suivant l'une des revendications 1 à 4, **caractérisé en ce que** la barre support (31) présente une section transversale ronde, de préférence ovale.

6. Siège de véhicule suivant l'une des revendications 1 à 5, **caractérisé en ce que** la barre support (31) est réalisée en une matière plastique renforcée de fibres de carbone.

7. Siège de véhicule suivant l'une des revendications 1 à 6, **caractérisé en ce que** les pieds de carcasse (32) et/ou les séparateurs de sièges (33) et/ou les consoles (35) sont réalisés en aluminium, en particulier fraisés, et sont fixés de préférence par un accouplement de serrage sur la barre support (31).

8. Siège de véhicule suivant l'une des revendications 1 à 7, **caractérisé en ce que** le siège (10) présente une caisse (11), qui est réalisée de préférence en une matière plastique renforcée de fibres de carbone et est munie d'un rembourrage (14) en un matériau élastique.

9. Siège de véhicule suivant la revendication 8, **caractérisé en ce que** la caisse (11) présente une surface supérieure (12), qui est munie d'une cavité (13) en forme de rampe.

10. Siège de véhicule suivant l'une des revendications 8 et 9, **caractérisé en ce que** la caisse (11) est munie d'un coffret de rangement (17).

11. Siège de véhicule suivant l'une des revendications 8 à 10, **caractérisé en ce que** la caisse (11) présente un évidement (18), qui est adapté au contour de la barre support (31) et sur lequel s'appuie la caisse (11) sur la barre support (31) dans la position d'assise sur le siège (10).

12. Siège de véhicule suivant l'une des revendications 8 à 11, **caractérisé en ce que** la caisse (11) présente un évidement (19) pour le ressort (60) et les consoles (35).

13. Siège de véhicule suivant l'une des revendications 1 à 12, **caractérisé en ce que** plusieurs, de préférence trois sièges (10) et dossiers (20), sont respectivement disposés en juxtaposition sur la barre support (31).

14. Siège de véhicule suivant l'une des revendications 1 à 13, **caractérisé en ce que** le ressort (60C) du siège (20C) tourné vers un couloir est disposé sur la barre support (31) dans la zone du siège central (20B).
